# EUROPEAN PATENT APPLICATION

(11) **EP 4 236 529 A1**
(43) Date of publication of application: **30.08.2023**
(21) Application number: 21882026.4
(22) Date of filing: 20.10.2021
(51) Int. Cl.: H04W 72/04, H04W 72/12

(54) **DATA TRANSMISSION METHOD AND APPARATUS, USER EQUIPMENT, NETWORK-SIDE DEVICE, AND STORAGE MEDIUM**

(30) Priority: 22.10.2020 CN 202011141197
(71) Applicant: Vivo Mobile Communication Co., Ltd., Dongguan, Guangdong 523863 (CN)
(72) Inventor: MO, Yitao, Dongguan, Guangdong 523863 (CN)
(74) Representative: Conti, Marco
(86) International application number: PCT/CN2021/124853
(87) International publication number: WO 2022/083611

(57) **Abstract**

Embodiments of this application provide a data transmission method and apparatus, a terminal, a network-side device, and a storage medium. The method includes: obtaining configuration information for data transmission, where the configuration information carries association configuration information between downlink signal and uplink transmission resource; selecting a target downlink signal, and determining a target uplink transmission resource based on the association configuration information between downlink signal and uplink transmission resource; and determining hybrid automatic repeat request HARQ information corresponding to the target uplink transmission resource and/or estimating a downlink pathloss, and transmitting uplink data based on the HARQ information and/or the estimated downlink pathloss.

## Description

### CROSS-REFERENCE TO RELATED APPLICATIONS

This application claims priority to Chinese Patent Application No. 202011141197.2, filed in China on October 22, 2020, which is incorporated herein by reference in its entirety.

### TECHNICAL FIELD

This application pertains to the field of communication technologies, and specifically relates to a data transmission method and apparatus, a terminal, a network-side device, and a storage medium.

### BACKGROUND

Efficient small data transmission is characterized in that, for terminals (User Equipment, UE) in a non-connected state (for example, idle (IDLE) state and inactive (INACTIVE) state), small data transmission is implemented using a very simple signaling procedure, avoiding excessive signaling overheads caused by radio resource control (Radio Resource Control, RRC) state transition and RRC connection establishment procedures.

Small data transmission scheme is characterized in that current data radio bearers (Data Radio Bearer, DRB) for a UE are all in a suspended state rather than a released state. Therefore, the UE can resume the DRBs first before sending a resume request (Resume Request) message, and then use RRC signaling to carry small data, in which case the UE can transmit data on the DRBs like a UE in a connected (CONNECTED) state, thus avoiding state transition and implementing efficient small data transmission with small signaling overheads.

For scenarios where a UE in an INACTIVE state transmits small data, a network side needs to configure, for the UE, small data transmission resources that are based on configured grant (configured grant). However, at present, there are no related solutions involving configuration resources for new radio (New Radio, NR) UEs and how the configuration resources are used for uplink data transmission, leading to low efficiency of small data transmission. Therefore, how configuration resources-based data transmission is conducted to improve the efficiency of small data transmission is an urgent problem to be resolved.

### SUMMARY

Embodiments of this application provide a data transmission method and apparatus, a terminal, a network-side device, and a storage medium, so as to resolve the technical problem of low efficiency of small data transmission.

To resolve the foregoing technical problem, this application is implemented as follows.

According to a first aspect, an embodiment of this application provides a data transmission method including:
obtaining, by a terminal, configuration information for data transmission, where the configuration information carries association configuration information between downlink signal and uplink transmission resource;
selecting, by the terminal, a target downlink signal, and determining a target uplink transmission resource based on the association configuration information between downlink signal and uplink transmission resource; and
determining, by the terminal, hybrid automatic repeat request HARQ information corresponding to the target uplink transmission resource and/or estimating a downlink pathloss, and transmitting uplink data based on the HARQ information and/or the estimated downlink pathloss.

According to a second aspect, an embodiment of this application provides a data transmission method including:
transmitting, by a network-side device to a terminal, configuration information for data transmission, where the configuration information carries association configuration information between reference signal and uplink transmission resource; and
receiving, by the network-side device, uplink data transmitted by the terminal based on HARQ information and/or a pathloss reference signal, where the HARQ information and/or the pathloss reference signal is determined by the terminal based on the configuration information.

According to a third aspect, an embodiment of this application provides a data transmission apparatus including:
an obtaining module, configured to obtain configuration information for data transmission, where the configuration information carries association configuration information between downlink signal and uplink transmission resource;
a determining module, configured to: select a target downlink signal, and determine a target uplink transmission resource based on the association configuration information between downlink signal and uplink transmission resource; and
a first transmitting module, configured to: determine hybrid automatic repeat request HARQ information corresponding to the target uplink transmission resource and/or estimate a downlink pathloss, and transmit uplink data based on the HARQ information and/or the estimated downlink pathloss.

According to a fourth aspect, an embodiment of this application provides a data transmission apparatus including:
a second transmitting module, configured to transmit configuration information for data transmission to a terminal, where the configuration information carries association configuration information between reference signal and uplink transmission resource; and
a receiving module, configured to receive uplink data transmitted by the terminal based on HARQ information and/or a pathloss reference signal, where the HARQ information and/or the pathloss reference signal is determined by the terminal based on the configuration information.

According to a fifth aspect, an embodiment of this application provides a terminal, where the terminal includes a processor, a memory, and a program or instructions stored in the memory and capable of running on the processor, and when the program or instructions are executed by the processor, the steps of the method according to the first aspect are implemented.

According to a sixth aspect, an embodiment of this application provides a network-side device, where the network-side device includes a processor, a memory, and a program or instructions stored in the memory and capable of running on the processor, and when the program or instructions are executed by the processor, the steps of the method according to the second aspect are implemented.

According to a seventh aspect, an embodiment of this application provides a readable storage medium, where the readable storage medium stores a program or instructions, and when the program or instructions are executed by a processor, the steps of the method according to the first aspect or the second aspect are implemented.

According to an eighth aspect, an embodiment of this application provides a chip, where the chip includes a processor and a communication interface, the communication interface is coupled to the processor, and the processor is configured to run a program or instructions to implement the method according to the first aspect or the second aspect.

According to a ninth aspect, a computer program product is provided, where the computer program product is stored in a non-volatile storage medium, and when the computer program product is executed by a processor, the steps of the method according to the first aspect or the second aspect are implemented.

Through resource configuration, the data transmission method and apparatus, the terminal, the network-side device, and the storage medium provided in the embodiments of this application enable a UE to implement uplink data transmission based on resources configured by a network side, thus improving efficiency of small data transmission.

### BRIEF DESCRIPTION OF DRAWINGS

FIG. 1 is a schematic diagram of a wireless communication system to which embodiments of this application are applicable;
FIG. 2 is a first schematic diagram of a data transmission method according to an embodiment of this application;
FIG. 3 is a schematic diagram of a sequence rule for uplink transmission occasions according to an embodiment of this application;
FIG. 4 is a first schematic diagram of an association relationship between uplink transmission occasion and first reference signal according to an embodiment of this application;
FIG. 5 is a second schematic diagram of an association relationship between uplink transmission occasion and first reference signal according to an embodiment of this application;
FIG. 6 is a second schematic diagram of a data transmission method according to an embodiment of this application;
FIG. 7 is a first schematic diagram of a data transmission apparatus according to an embodiment of this application;
FIG. 8 is a second schematic diagram of a data transmission apparatus according to an embodiment of this application;
FIG. 9 is a schematic diagram of a hardware structure of a terminal according to an embodiment of this application; and
FIG. 10 is a schematic diagram of a hardware structure of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, objects distinguish by "first" and "second" are usually of a same type, and the number of such objects is not limited. For example, a first object may be one object or a plurality of objects. In addition, in this specification and claims, "and/or" represents at least one of connected objects, and the character "/" generally represents an "or" relationship between the associated objects.

It should be noted that the technologies described in the embodiments of this application are not limited to long term evolution (Long Term Evolution, LTE)/LTE-advanced (LTE-Advanced, LTE-A) systems, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, for example, a 6th generation (6th Generation, 6G) communication system.

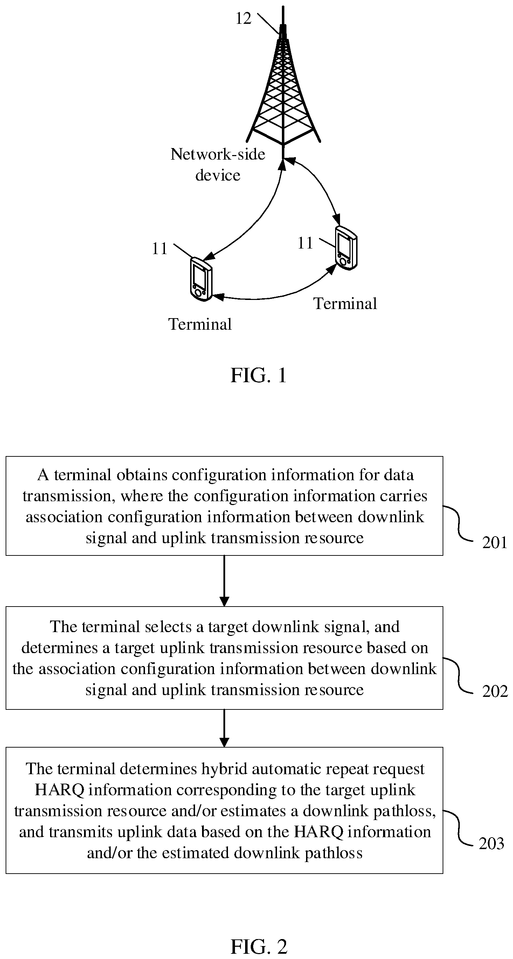

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), or vehicle user equipment (VUE), or pedestrian user equipment (PUE). The wearable device includes a wrist band, a headset, a pair of glasses, and the like. It should be noted that a specific type of the terminal 11 is not limited in the embodiments of this application. The network-side device 12 may be a base station or a core network. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmission-reception point (Transmitting Receiving Point, TRP), or another appropriate term in the art. Provided that a same technical effect is achieved, the base station is not limited to any specific technical term. It should be noted that in the embodiments of this application, the base station in the NR system is merely used as an example, and a specific type of the base station is not limited.

A data transmission method and apparatus, a terminal, a network-side device, and a storage medium provided in the embodiments of this application are hereinafter described in detail by using specific embodiments and application scenarios thereof with reference to the accompanying drawings.

FIG. 2 is a first schematic diagram of a data transmission method according to an embodiment of this application. As shown in FIG. 2, an embodiment of this application provides a transmission method which may be performed by a terminal. The method includes the following steps.

Step 201. A terminal obtains configuration information for data transmission, where the configuration information carries association configuration information between downlink signal and uplink transmission resource.

Step 202. The terminal selects a target downlink signal, and determines a target uplink transmission resource based on the association configuration information between downlink signal and uplink transmission resource.

Step 203. The terminal determines hybrid automatic repeat request HARQ information corresponding to the target uplink transmission resource and/or estimates a downlink pathloss, and transmits uplink data based on the HARQ information and/or the estimated downlink pathloss.

Optionally, the method further includes: receiving, by the terminal, downlink data based on the target downlink signal.

Optionally, the association configuration information between downlink signal and uplink transmission resource includes at least one of the following:
association configuration information between downlink signal and uplink transmission occasion;
identifier of downlink signal;
first scrambling identifier information of uplink signal;
second scrambling identifier information of uplink signal;
code division multiple group information of uplink signal; and
antenna port information of uplink signal.

Optionally, the configuration information further includes at least one of the following:
the number of uplink transmission occasion that is frequency division multiplexed at one moment;
time domain resource allocation information of uplink transmission occasion;
frequency domain resource allocation information of uplink transmission occasion;
configuration information of downlink signal;
duration information of a configured grant response timer;
measurement threshold for downlink signal selection;
first power ramping step parameter;
second power ramping step parameter;
maximum number of configured grant transmission;
desired receive power;
mask information of uplink transmission occasion;
configured grant periodicity;
duration information of a configured grant timer; and
maximum number of uplink skip; where
the time domain resource allocation information of uplink transmission occasion includes at least one of the following:
   the number of slots in each configured grant period;
   the number of uplink transmission occasion in each slot; and
   the number of uplink transmission occasion in each configured grant period; and
   the frequency domain resource allocation information of uplink transmission occasion includes at least one of the following:
      bandwidth information; and
      information about start location of uplink transmission occasion in frequency domain.

Optionally, the determining hybrid automatic repeat request HARQ information corresponding to the target uplink transmission resource includes:
determining the HARQ information corresponding to the target uplink transmission resource based on at least one of the following:
a total number of available HARQ process;
index corresponding to the available HARQ process;
a total number of available HARQ process in each configured grant period;
index corresponding to the available HARQ process in each configured grant period; and
index corresponding to HARQ process that corresponds to uplink transmission resource in each configured grant period.

Optionally, the estimating a downlink pathloss includes:
estimating the downlink pathloss based on the target downlink signal.

Optionally, the method further includes at least one of the following:
in a case that no configuration resource-based data transmission procedure is triggered at any uplink transmission occasion in one configured grant period, incrementing a first counter by 1, where the first counter is used to count skip of data transmission; and
in a case that a value of the first counter is greater than or equal to a maximum number of uplink skip, or in a case that no configuration resource-based data transmission procedure is triggered at any uplink transmission occasion in N consecutive configured grant periodicities, performing at least one of the following terminal behaviors:
   terminating the configuration resource-based data transmission procedure;
   releasing the uplink transmission resource; and
   discarding the configuration information.

Optionally, the method further includes: after a configuration resource-based data transmission procedure is triggered, performing at least one of the following terminal behaviors:
indicating, by a radio resource control RRC layer to a medium access control MAC layer, that the configuration resource-based data transmission procedure is triggered;
after the MAC layer is indicated by the RRC layer that the configuration resource-based data transmission procedure is triggered, storing the uplink transmission resources and corresponding HARQ information and/or initializing or reinitializing the uplink transmission resources;
in a case that no corresponding medium access control protocol data unit MAC PDU is generated at any uplink transmission occasion in one configured grant period, transmitting, by the MAC layer, an uplink skip indication to a higher layer;
in a case that the higher layer receives the uplink skip indication, incrementing a first counter by 1; and
in a case that a value of the first counter is greater than or equal to a maximum number of uplink skip, performing at least one of the following terminal behaviors:
   terminating the configuration resource-based data transmission procedure;
   instructing, by the RRC layer, the MAC layer to end the configuration resource-based data transmission procedure;
   clearing the uplink transmission resources and/or corresponding HARQ information;
   releasing the uplink transmission resource; and
   discarding the configuration information.

Optionally, the method further includes:
setting power ramping step parameter based on a second power ramping step parameter configured by a network-side device, and at least one of a target access identity provided by a higher layer, a target access type provided by a higher layer, and first indication information transmitted by the network-side device, where the power ramping step parameter includes a first power ramping step parameter and the second power ramping step parameter, and the first indication information is used to indicate that the terminal is to use the second power ramping step parameter.

Optionally, the method further includes at least one of the following:
selecting the target downlink signal based on a measurement threshold for downlink signal selection;
generating an uplink signal based on the selected target downlink signal and/or the association configuration information between downlink signal and uplink transmission resource;
determining a latest available uplink transmission occasion based on the selected target downlink signal;
determining an uplink grant and corresponding HARQ information based on the selected uplink transmission occasion; and
delivering the uplink grant and corresponding HARQ information to a HARQ entity.

Optionally, the HARQ entity performs an uplink skip according to a predefined rule and reports an uplink skip indication to a higher layer.

Optionally, in a case that a MAC PDU is obtained, that data is to be transmitted using a corresponding HARQ process is indicated.

Optionally, the process of transmitting uplink data further includes at least one of the following:
incrementing a third counter by 1 based on a second counter, an indication of suspending a power ramping counter, a listen before talk LBT failure indication, an uplink skip indication, and the selected target downlink signal; and
determining a data transmission power based on the third counter, a power ramping step parameter, the estimated downlink pathloss, and a desired receive power.

Optionally, the receiving downlink data includes:
after transmission of a MAC PDU at an uplink transmission occasion, performing at least one of following: starting or restarting a configured grant response timer; starting or restarting a configured grant timer; and monitoring a physical downlink control channel PDCCH, where
a demodulation reference signal antenna port of the PDCCH and the target downlink signal have same quasi co-location properties.

Optionally, during running of the configured grant response timer, a terminal behavior includes at least one of the following:
in a case that an indication for confirming correct data transmission has been received, stopping the configured grant response timer and/or the configured grant timer;
in a case that an indication for confirming correct data transmission has been received, restarting a T319 timer;
in a case that an indication for confirming correct data transmission has been received, setting a value of a first counter to 0;
in a case that a PDCCH for scheduling uplink retransmission has been received, stopping the configured grant response timer and/or restarting the configured grant timer;
in a case that a PDCCH for scheduling new uplink transmission has been received, stopping the configured grant response timer and/or the configured grant timer;
in a case that a PDCCH for scheduling downlink transmission has been received and that a corresponding scheduled MAC PDU has been successfully decoded, performing at least one of the following terminal behaviors:
   stopping the configured grant response timer and/or the configured grant timer;
   disassembling and/or demultiplexing the MAC PDU; and
   reporting a hybrid automatic repeat request acknowledgment HARQ-ACK indication; and
   in a case that a PDCCH for scheduling downlink transmission has been received and that a corresponding scheduled MAC PDU has not been successfully decoded, reporting a hybrid automatic repeat request negative acknowledgment HARQ-NACK indication.

Optionally, after the configured grant response timer expires, a terminal behavior includes at least one of the following:
incrementing a second counter by 1; and
in a case that a value of the second counter is equal to a threshold of maximum number of configured grant transmission plus 1, performing at least one of the following terminal behaviors:
   reporting a failure or fallback indication to a higher layer;
   terminating a configuration resource-based data transmission procedure;
   releasing the uplink transmission resource;
   discarding the configuration information; and
   clearing the uplink transmission resources and corresponding HARQ information.

Specifically, the UE receives dedicated uplink resources configured by a network side ("uplink transmission resource" for short) and transmits uplink data. In this embodiment of application, that a first reference signal is a downlink signal and a second reference signal is an uplink signal is used as an example for description.

For example, the network device side has configuration information of a configured grant (Configured grant) carried in an RRC release (Release) message for a UE in an INACTIVE state, where the configuration information includes physical uplink shared channel (Physical Uplink Shared Channel, PUSCH) resources dedicated for the INACTIVE UE to transmit uplink data.

Optionally, the PUSCH resources may include at least one of the following:
1. Uplink transmission occasions.
2. Second reference signal resources.

Optionally, the configuration information of the configured grant may include at least one of the following:
1. The number (for example, 1, 2, 4, and 8) of uplink transmission occasion that is frequency division multiplexed (Frequency division multiplexing, FDMed) at one moment.
2. Time domain resource allocation information of uplink transmission occasion.

Optionally, the time domain resource allocation information of uplink transmission occasion may include at least one of the following:
(1) Quantity information of allocated slots and quantity information of allocated first uplink transmission occasions, where the quantity information of allocated slots indicates the number of slots in one CG period (periodicity), the slot including one or more uplink transmission occasions, and the quantity information of allocated first uplink transmission occasions indicates the number of uplink transmission occasions in one slot.
(2) Quantity information of allocated second uplink transmission occasions, where the quantity information of allocated second uplink transmission occasions indicates the number of uplink transmission occasions in one CG period.

Optionally, the above-mentioned slots and/or uplink transmission occasions are consecutive in time domain.

3. Frequency domain resource allocation information of uplink transmission occasion.

Optionally, the frequency domain resource allocation information of uplink transmission occasion may include at least one of the following:
(1) Bandwidth information.

For example, the number of radio physical resource blocks (physical resource block, PRB) at each uplink transmission occasion.

(2) Information about start location of uplink transmission occasion in frequency domain.

For example, an offset between the lowest uplink transmission occasion at a frequency domain location and PRB 0, and for another example, a frequency domain start location of the lowest uplink transmission occasion at the frequency domain location is PRB 0/RBG 0, where RBG is resource block group (resource block group).

4. First reference signal configuration information.

The first reference signal configuration information indicates first reference signals that can be used for a configuration resource-based data transmission procedure (for example, a small data transmission (small data transmission) procedure).

For example, the network side indicates, by using a bitmap (bitmap), synchronization signal block blocks (synchronization signal block, SSB) in a serving cell which can be used for small data transmission.

Optionally, the first reference signal is a downlink pathloss reference signal.

For example, the first reference signal is one of an SSB or a channel state information reference signal (Channel State Information-Reference Signal, CSI-RS).

Optionally, if the first reference signal configuration information is not configured, the UE considers that all transmitted first reference signals (for example, SSBs) indicated in a system message can be used for the configuration resource-based data transmission procedure.

5. Association configuration information between first reference signal and uplink transmission occasion.

The association configuration information between first reference signal and uplink transmission occasion indicates how many first reference signals are associated with one uplink transmission occasion (for example, 1/8 indicates that one SSB is mapped to eight uplink transmission occasions, and 8 indicates that eight SSBs are mapped to one uplink transmission occasion, thus making SSBs and uplink transmission occasions associated).

6. Association configuration information between first reference signal and second reference signal.

Optionally, the association configuration information between first reference signal and second reference signal may include at least one of the following:
(1) Identifiers or indexes (for example, SSB-indexes) of the first reference signals.
(2) First scrambling identifier information (for example, ScramblingID0 = 0) of the second reference signals, where the first scrambling identifier information is used for scrambling initialization of the first reference signals.
(3) Second scrambling identifier information (for example, ScramblingID1 = 1) of the second reference signals, where the second scrambling identifier information is used for scrambling initialization of the second reference signals.
(4) Code division multiplexing group (CDM group) information (for example, λ = 0) of the second reference signals.
(5) Antenna port (antenna port) information (for example, demodulation reference signal port indexes (DMRS port index)) of the second reference signals.

For example, in the association configuration information between first reference signal and second reference signal, SSB-index is 1, ScramblingID0 = 0, ScramblingID 1 = 1, λ = 0, and DMRS port index = 0, indicating that SSB 1 is associated with the DMRS signal formed according to ScramblingID0 = 0, ScramblingID1 = 1, λ = 0, and DMRS port index = 0. For another example, in the association configuration information between first reference signal and second reference signal, SSB-index is 2, ScramblingID0 = 11, ScramblingID1 = 20, and λ = 0, indicating that SSB2 is associated with the DMRS signal formed according to ScramblingID0 = 11, ScramblingID1 = 20, and λ = 0. Details are not exhaustively illustrated herein.

Optionally, the first reference signal may be at least one of an SSB or a CSI-RS, and the second reference signal may be an uplink demodulation reference signal (Demodulation Reference Signal, DMRS).

Optionally, the association configuration information between first reference signal and second reference signal includes association relationship information of one or more first reference signals and second reference signals. The configuration information may be a list in which each element indicates association information of a first reference signal and a second reference signal.

7. Duration information of a configured grant response timer (CG response timer).

8. Measurement threshold for first reference signal selection (a threshold, for example, rsrp-ThresholdSSB).

9. First (low-priority) power ramping step (power ramping step) parameter.

10. Second (high-priority) power ramping step parameter.

11. Maximum CG transmission count (a threshold).

12. Desired receive power.

13. Mask (mask) information of uplink transmission occasion. The mask information of uplink transmission occasion is used to explicitly indicate uplink transmission occasion that can be used for a configuration resource-based data transmission procedure.

14. CG periodicity.

15. Duration information of a configured grant timer (CG timer).

16. Maximum number of uplink skip (a threshold).

The network side or a protocol predefines any one of the following rules:
1. A sequence rule for uplink transmission occasions.

The sequence rule for numbering uplink transmission occasions may include at least one of the following:
(1) sequentially increasing in frequency domain by the number of FDMed uplink transmission occasions;
(2) then sequentially increasing in one slot by the number of TDMed uplink transmission occasions allocated;
(3) then sequentially increasing by the number of TDMed uplink transmission occasions allocated; and
(4) finally sequentially increasing by the number of allocated slots.

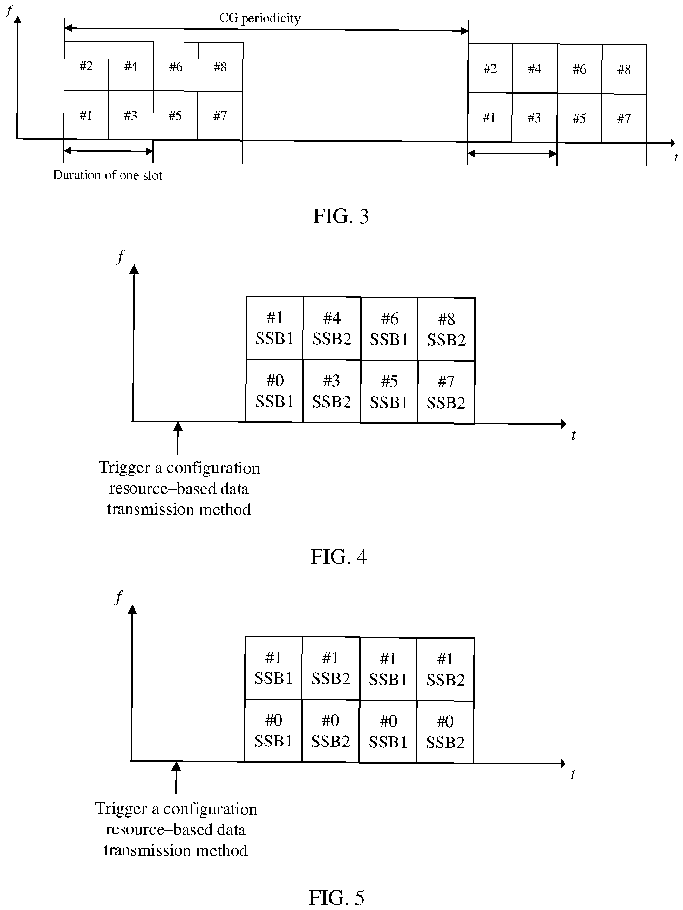

FIG. 3 is a schematic diagram of a sequence rule for uplink transmission occasions according to an embodiment of this application. Assuming that in the configuration, the number of uplink transmission occasion that is frequency division multiplexed at one moment is 2, the number of allocated uplink transmission occasions at one moment is 2, and the number of allocated slots is 2, indexes of the uplink transmission occasions are shown in FIG. 3.

2. Association between first reference signal and uplink transmission occasion.

For example, the UE first verifies whether all configured uplink transmission occasions are valid, then for each CG configuration, determines mapping cycle (mapping cycle) according to all valid uplink transmission occasions and the number of configured SSBs in one CG period, and maps the SSBs to the uplink transmission occasions. Assuming that the network configures SSB1/2/3/4, and that uplink transmission occasions #1/2/3/4/5/6/7/8 in one CG period are all valid, two cycles of mapping are implemented (that is, floor(8/4) = 2) in this case, and finally, SSB1 is associated with uplink transmission occasions #1 and #5, SSB2 is associated with uplink transmission occasions #2 and #6, and so on.

3. Hybrid automatic repeat request HARQ process information for new transmission.
(1) Protocol predefined or network device side configured HARQ process information available to UE.

For example, for one CG configuration, in one CG period, a HARQ process corresponding to any uplink transmission occasion is predefined by protocol or configured by the network device side to 0. Similarly, in a subsequent CG period, a HARQ process corresponding to any uplink transmission occasion is predefined by protocol or configured by the network device side to 0.

(2) Protocol predefined or network side configured HARQ process information available to UE.

For example, for one CG configuration, in the first period, a HARQ process corresponding to any uplink transmission occasion is prescribed to 0; in the second period, for any CG, a HARQ process available to LTE is prescribed to 1; and so on. Alternatively, this can be understood as follows: In one CG period, a HARQ process corresponding to any uplink transmission occasion is the HARQ process corresponding to the uplink transmission occasion with the smallest index. How the HARQ process corresponding to the uplink transmission occasion with the smallest index is determined is not limited herein.

4. Association between first reference signal and pathloss reference signal.

For configuration resource-based data transmission, a pathloss reference signal (pathloss RS) corresponding to a PUSCH is autonomously selected by UE.

Optionally, the pathloss RS of the PUSCH is a first reference signal that is on a current active downlink bandwidth part (DL BWP) (for example, an initial DL BWP) in the current serving cell and that is associated with the current PUSCH transmission.

For example, the network configures SSB1/2/3/4, and the UE triggers a configuration resource-based data transmission procedure. In this case, the UE selects SSB2 (that is, SSB2 is a target downlink signal) according to a measurement quality threshold for first reference signal selection, and transmits the PUSCH according to the uplink transmission occasion associated with SSB2 and a second reference signal. The UE uses SSB2 as the pathloss RS of the PUSCH so as to estimate a downlink pathloss using SSB2.

Optionally, before the uplink transmission resources are used for data transmission, the method includes the following steps.

Step 0: If no configuration resource-based data transmission procedure is triggered at any uplink transmission occasion in one CG period, perform the following steps.

Optionally, a first counter is incremented by 1.

The first counter is used to count skip of data transmission. If value of first counter = maximum number of uplink skip, that is, the value of the first counter is greater than or equal to the maximum number of uplink skip, the configuration resource-based data transmission procedure is terminated (ended), the uplink transmission resources are released, and the configuration information is discarded.

Optionally, if no configuration resource-based data transmission procedure is triggered at any uplink transmission occasion in N consecutive CG periodicities, the configuration resource-based data transmission procedure is ended, the uplink transmission resources are released, and the configuration information is discarded. The threshold N may be configured by the network-side device (NW) or prescribed or predefined by a protocol.

Optionally, this process may be implemented per configured grant period (per CG periodicity) per configured grant configuration (per CG configuration).

For example, assuming that the network side configures two CG configurations, the UE needs to implement the above process for each CG period corresponding to CG configuration 1/2.

Step 1: After a configuration resource-based data transmission procedure is triggered, perform at least one of the following steps.
1. An RRC layer indicates to a MAC layer that the configuration resource-based data transmission procedure is triggered.
2. After being indicated by the RRC layer that the configuration resource-based data transmission procedure is triggered, the MAC layer stores the dedicated uplink resources and corresponding HARQ information.

Optionally, the uplink resource may be understood as an uplink grant UL grant or a configured grant CG.

3. The MAC layer initializes/reinitializes the dedicated uplink resources.

4. If no corresponding MAC PDU is generated at any uplink transmission occasion in one CG period (which may be understood as that no PUSCH is transmitted), the MAC layer transmits an uplink skip indication to a higher layer (RRC layer), and the higher layer increments the first counter by 1 (the first counter is used to count skip of data transmission).

If value of first counter = maximum number of uplink skip, that is, the value of the first counter is greater than or equal to the maximum number of uplink skip, the terminal behavior includes at least one of the following:
(1) terminating the configuration resource-based data transmission procedure;
(2) instructing, by the RRC layer, the MAC layer to end the configuration resource-based data transmission procedure;
(3) clearing, by the MAC layer, the dedicated uplink resources and corresponding HARQ information stored in step 1; and
(4) discarding, by the RRC layer, all the configuration information stored in step 0.

Step 2: Before transmitting uplink data over the dedicated uplink resources, the UE initializes the dedicated uplink resources.

If the network side configures a high-priority power ramping step parameter, a higher layer provides access ID 1 or 2, and the network side instructs the UE to use the high-priority power ramping step parameter, the UE configures the high-priority power ramping step parameter.

Otherwise, the UE configures a low-priority power ramping step parameter.

Optionally, this process is implemented per CG configuration.

For example, assuming that the network side configures two CG configurations, the UE needs to implement the above process for CG configuraton1/2.

Step 3: Before transmitting uplink data over the dedicated uplink resources, the UE selects transmission resources.
1. The UE selects, based on a measurement threshold for first reference signal selection, a first reference signal for a configuration resource-based data transmission procedure.

For example, assuming that the network side configures SSB1/2/3/4, the first reference signal is selected based on the measurement threshold configured by the network side (for example, the threshold is -80 dBm). Based on most recently measured L1-RSRPs of SSB1/2/3/4, assuming that only L1-RSRP of SSB3 (for example, - 70dBm) is higher than the threshold, the UE selects SSB3.

2. A second reference signal is generated (generate) based on the selected first reference signal and/or association configuration information between first reference signal and second reference signal.

For example, the association configuration information between first reference signal and second reference signal is configured as SSB-index = 2, ScramblingID0 = 11, ScramblingID1 = 20, and λ = 0. Based on that the selected first reference signal is SSB2, a second reference signal (DMRS) is formed according to ScramblingID0 = 11, ScramblingID1 = 20, and λ = 0.

3. A latest available uplink transmission occasion (the uplink transmission occasions are associated with the selected first reference signal) is determined based on the selected first reference signal.

4. Optionally, the UE randomly selects, with equal probability, one of the consecutive uplink transmission occasions associated with the selected first reference signal.

For example, FIG. 4 is a first schematic diagram of an association relationship between uplink transmission occasion and first reference signal according to an embodiment of this application. As shown in FIG. 4, assuming that the network side configures SSB 1/2, first reference signal selection is implemented based on a quality measurement threshold configured by the network side (for example, the threshold is -80 dBm). Based on the most recently measured L1-RSRPs of SSB1/2, assuming that only L1-RSRP of SSB2 (for example, -70dBm) is higher than the threshold, the UE selects SSB2, and then randomly selects, with equal probability, one (for example, #3) of the two uplink transmission occasions (#3/4) associated with SSB2. It can be understood that the uplink transmission occasions (#3/4) are latest available uplink transmission occasions corresponding to SSB2.

Optionally, the latest available uplink transmission occasion may alternatively be determined based on the selected first reference signal and mask (mask) information of uplink transmission occasion.

For example, FIG. 5 is a second schematic diagram of an association relationship between uplink transmission occasion and first reference signal according to an embodiment of this application. As shown in FIG. 5, assuming that the network side configures SSB 1/2, first reference signal selection is implemented based on a quality measurement threshold configured by the network side (for example, the threshold is -80 dBm). Based on the most recently measured L1-RSRPs of SSB1/2, assuming that only L1-RSRP of SSB2 (for example, -70dBm) is higher than the threshold, the LTE selects SSB2; and assuming that the mask information of uplink transmission occasion indicates a value 1 (for example, 1 indicates that the UE is to use the first one of the uplink transmission occasions associated with the selected SSB), the UE selects latest available SSB2#0. For another example, assuming that the mask information of uplink transmission occasion indicates a value 0 (for example, 0 indicates that all the uplink transmission occasions associated with the selected SSB are available to the UE), the UE randomly selects, with equal probability, one (for example, #0) of two latest available uplink transmission occasions (SSB2#0/1) associated with SSB2. Finally, the UE transmits, at the selected uplink transmission occasion (for example, #0), a PUSCH based on the selected SSB (for example, SSB2). An uplink DMRS of the PUSCH is a second reference signal (an uplink DMRS formed according to ScramblingID0 = 11, ScramblingID 1 = 20, and λ = 0) generated (generate) based on the selected SSB.

5. An uplink grant (UL grant) and corresponding HARQ information are determined based on the selected uplink transmission occasion, for example, HARQ process identifier (HARQ process ID), new data indicator bit (new data indicator bit, NDI bit), and transport block size (Transport Block Size, TBS).

6. The UL grant and corresponding HARQ information are delivered to a HARQ entity.

Optionally, the UL grant and corresponding HARQ information are delivered to the HARQ entity only when the CG response timer and/or CG timer corresponding to the HARQ process ID that corresponds to the UL grant is not running (which may be understood as that, during running of the CG response timer, the corresponding HARQ process cannot be used for new transmission or retransmission).

Optionally, the UL grant and corresponding NDI bit are toggled only when the CG timer corresponding to the HARQ process ID that corresponds to the UL grant is not running (which may be understood as that, during running of the CG timer, the corresponding HARQ process cannot be used for new transmission).

7. Optionally, according to a predefined rule, the HARQ entity performs an uplink skip (UL skipping) without generating a MAC PDU, and reports an uplink skip indication to the RRC layer.

8. Optionally, this process may be implemented per CG period per CG configuration.

For example, assuming that the network side configures two CG configurations, the UE needs to implement the above process for each CG period corresponding to CG configuration 1/2.

Step 4.1: If a MAC PDU is obtained, that data is to be transmitted using a corresponding HARQ process is indicated.

Step 4.2: When the UE transmits uplink data over the dedicated uplink resources, the following steps are performed:
1. A third counter is incremented by 1 based on a second counter, an indication of suspending a power ramping counter (suspending power ramping counter), a listen before talk (listen before talk, LBT) failure indication, an uplink skip indication, and the first reference signal selected for the current transmission.

For example, the third counter is incremented by 1 if a value of the second counter is greater than 1, no indication of suspending a power ramping counter is received from a physical layer, no LBT failure indication is received from the physical layer, no uplink skip indication is generated in the MAC layer, and the first reference signal selected for the current transmission remains unchanged (which may be understood as that the first reference signal selected for the current transmission and the first reference signal selected for the previous transmission are the same one). The third counter is used to calculate a sum of accumulated power ramping.

2. The MAC layer indicates the sum of accumulated power ramping (for example, (a value of the third counter - 1) * configured power ramping step parameter) and a desired receive power to the physical layer.

3. The physical layer may determine an uplink transmit power of data transmission based on the sum of accumulated power ramping, the estimated downlink pathloss, and the desired receive power.

4. Optionally, this process is implemented per CG period per CG configuration.

For example, assuming that the network side configures two CG configurations, the UE needs to implement the above process for each CG period corresponding to CG configuration 1/2.

Step 5: The UE receives responses after transmitting uplink data over the dedicated uplink resources:
1. When a MAC PDU is transmitted at an uplink transmission occasion (for example, a PUSCH corresponding to the configured grant (CG-PUSCH)), the UE starts the CG response timer at the first PDCCH occasion following the CG-PUSCH, regardless of the potential measurement gap (measurement gap), and during running of the timer, the UE monitors an RNTI-scrambled PDCCH.

Optionally, the UE starts the CG timer (with a start moment consistent with that of the CG response timer).

2. The UE assumes that the first reference signal selected in step 3 (which may be understood as the first reference signal associated with transmission of the CG-PUSCH) and a DM-RS antenna port (which may be understood as a DMRS of the PDCCH) have same quasi co-location properties (quasi co-location properties).

3. Optionally, the CG response timer is maintained per HARQ process.

4. Optionally, this process is implemented per CG period per CG configuration. For example, assuming that the network side configures two CG configurations, the UE needs to implement the above process for each CG period corresponding to CG configuration 1/2.

Optionally, during running of the CG response timer, the following steps are performed:
1. If the UE receives an indication for confirming correct data transmission, the CG response timer (corresponding to the HARQ process) and/or CG timer is stopped. Optionally, the indication for confirming correct data transmission may be carried on a PDCCH. Optionally, the indication for confirming correct data transmission is indicated per HARQ process, and optionally, one PDCCH may carry an indication for confirming correct data transmission for one or more HARQ processes.
2. Optionally, if the UE receives an indication for confirming correct data transmission, a T319 timer is restarted.
3. Optionally, if the UE receives an indication for confirming correct data transmission, a value of the first counter is set to 0.
4. If the UE receives a PDCCH for scheduling uplink retransmission, the CG response timer (corresponding to the HARQ process) is stopped and/or the CG timer (corresponding to the HARQ process) is restated.

Retransmission is implemented based on content of the PDCCH, and after the PUSCH for retransmission is transmitted, the UE starts the CG response timer and starts/restarts the CG timer at the first PDCCH occasion following the PUSCH, regardless of the potential measurement gap.

5. If the UE receives a PDCCH for scheduling new uplink transmission, the CG response timer (corresponding to the HARQ process) and/or the CG timer (corresponding to the HARQ process) is stopped.

New transmission is implemented based on content of the PDCCH, and after the PUSCH for new transmission is transmitted, the UE starts the CG response timer and starts/restarts the CG timer at the first PDCCH occasion following the PUSCH, regardless of the potential measurement gap.

6. If the UE receives a PDCCH for scheduling downlink transmission and a corresponding scheduled PDSCH has been successfully decoded, the CG response timer (corresponding to the HARQ process) and/or the CG timer (corresponding to the HARQ process) is stopped.

Then, the UE disassembles (disassemble) and demultiplexes (demultiplex) the MAC PDU. The UE reports a HARQ-ACK indication based on UCI resource indication information of the PDCCH.

Optionally, the PDCCH carries response indication information, where the response indication information indicates an uplink HARQ process to which the downlink scheduling responds (for example, the PDCCH carries response indication information indicating that the downlink scheduling responds to the uplink HARQ process with ID 0).

7. If the UE receives a PDCCH for scheduling downlink transmission has been received but a corresponding scheduled PDSCH has not been successfully decoded, the UE reports a HARQ-NACK indication based on UCI resource indication information of the PDCCH.

Optionally, the PDCCH carries response indication information, where the response indication information indicates an uplink HARQ process to which the downlink scheduling responds (for example, the PDCCH carries response indication information indicating that the downlink scheduling responds to the uplink HARQ process with ID 0).

8. The UE assumes that the first reference signal selected in the latest step 3 (which may be understood as the first reference signal associated with transmission of the CG-PUSCH) and a DM-RS antenna port (which may be understood as a DMRS of the PDCCH) have same quasi co-location properties (quasi co-location properties).

Optionally, after the CG response timer expires, the following steps are performed:
1. After the CG response timer expires, the second counter is incremented by 1.
2. If value of second counter = threshold of maximum CG transmission count +1, that is, the value of the second counter is greater than the threshold of maximum number of configured grant transmission, at least one of the following is performed:
   (1) reporting a failure/fallback indication to a higher layer (RRC layer);
   (2) terminating a configuration resource-based data transmission procedure;
   (3) clearing, by the MAC layer, the dedicated uplink resources and corresponding HARQ information stored in step 1; and
   (4) clearing, by the RRC layer, all the resources and information stored in step 0.

Otherwise, the resource selection process in step 3 is performed.

3. Optionally, a CG transmission counter is maintained per HARQ process. If the largest/smallest value of the second counter values corresponding to all HARQ processes = threshold of maximum CG transmission count +1, that is, the largest or smallest value of the second counter values corresponding to all HARQ processes is greater than the threshold of maximum number of configured grant transmission, at least one of the following is performed:
(1) reporting a failure/fallback indication to a higher layer (RRC layer);
(2) terminating a configuration resource-based data transmission procedure;
(3) clearing, by the MAC layer, the dedicated uplink resources and corresponding HARQ information stored in step 1; and
(4) clearing, by the RRC layer, all the resources and information stored in step 0.

Otherwise, the resource selection process in step 3 is performed.

4. The UE assumes that the first reference signal selected in the latest step 3 (which may be understood as the first reference signal associated with transmission of the CG-PUSCH) and a DM-RS antenna port (which may be understood as a DMRS of the PDCCH) have same quasi co-location properties (quasi co-location properties).

The following describes the method in the foregoing embodiment by assuming that there is only one CG configuration and the first HARQ process rule is used for configuration resource-based data transmission.

Step A (at moment T0): The UE receives dedicated uplink resources through an RRC release message, where the dedicated uplink resources are configured with one CG configuration.

Step B (during a period from T0 to T1): After the UE (for example, the RRC layer) receives the above configuration, in each CG period, if no configuration resource-based data transmission procedure is triggered at any (valid) uplink transmission occasion in the CG period, the first counter is incremented by 1.

Step C (at moment T1): The UE (for example, the RRC layer) triggers a configuration resource-based data transmission procedure, in which case the RRC layer indicates to the MAC layer that the configuration resource-based data transmission procedure is triggered, and then the MAC layer stores the dedicated uplink resources and corresponding HARQ information and initializes the dedicated uplink resources.

Step D (at moment T2): Power ramping step parameter is set according to step 2.

Step E (at moment T3): In each CG period, resource selection is performed according to step 3 (selecting an SSB, determining a DMRS associated with the selected SSB, determining uplink transmission, and determining a UL grant and corresponding HARQ information based on uplink transmission occasions).

Step F (at moment T4): Uplink data is transmitted according to steps 4-1 and 4-2.

Step G (at moment T5): The CG response timer is started and PDCCH monitoring is performed according to step 5. The UE assumes that an antenna port of the PDCCH and the SSB selected in step E have same quasi co-location properties.

Step H-1 (at moment T6): During running of the CG response timer, if the UE receives an indication for confirming correct data transmission, the CG response timer is stopped, the T319 timer is restarted, and a value of the first counter is set to 0 (by the RRC layer).

Step H-2 (at moment T6): During running of the CG response timer, if the UE receives a PDCCH for scheduling downlink transmission and a corresponding scheduled PDSCH has been successfully decoded, the CG response timer is stopped, and a HARQ-ACK indication is reported.

Step H-1 (at moment T6): During running of the CG response timer, if the UE receives an indication for confirming correct data transmission, the CG response timer is stopped, the T319 timer is restarted, and a value of the first counter is set to 0 (by the RRC layer).

Step H-3 (at moment T6): During running of the CG response timer, if the UE receives a PDCCH for scheduling downlink transmission, a corresponding scheduled PDSCH has been successfully decoded, and the PDCCH carries an indication for confirming correct data transmission, the CG response timer is stopped, a HARQ-ACK indication is reported, and the T319 timer is restarted.

Step I (at moment T7): The UE may perform the resource selection procedure in a latest available CG period, and then perform steps E -> F -> G -> H -> I to implement transmission of new data.

The data transmission method provided in this embodiment of this application includes a resource configuration method, a method of how downlink first reference signals are associated with configuration resources, a configuration resource selection method, and a configuration resource-based data transmission/response reception method, enabling a UE to implement uplink data transmission based on configuration resources of a network side, and thus improving efficiency of small data transmission.

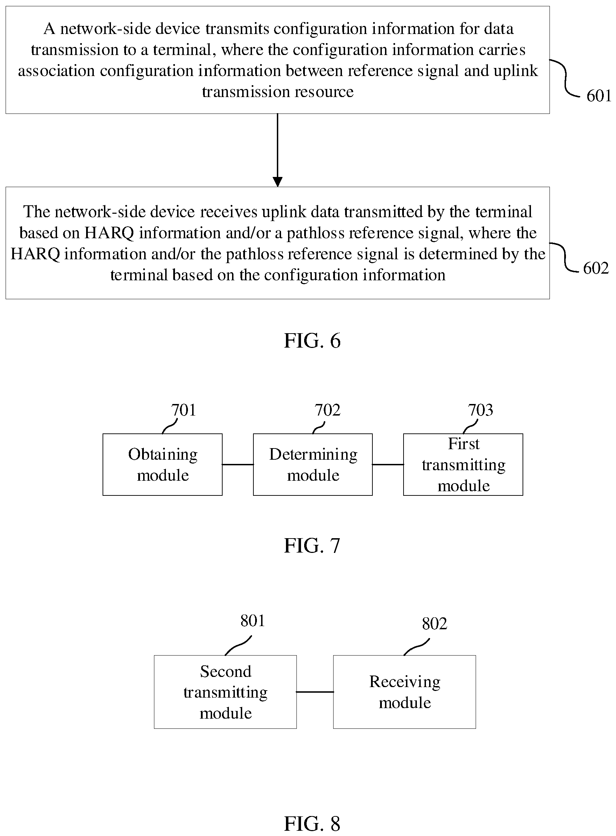

FIG. 6 is a second schematic diagram of a data transmission method according to an embodiment of this application. As shown in FIG. 6, an embodiment of this application provides a data transmission method which may be performed by a network-side device. The method includes the following steps.

Step 601. The network-side device transmits configuration information for data transmission to a terminal, where the configuration information carries association configuration information between reference signal and uplink transmission resource.

Step 602. The network-side device receives uplink data transmitted by the terminal based on HARQ information and/or a pathloss reference signal, where the HARQ information and/or the pathloss reference signal is determined by the terminal based on the configuration information.

Optionally, the method further includes:
transmitting, based on a target downlink signal selected by the terminal, downlink data to the terminal.

Optionally, the transmitting downlink data includes:
after transmission of a MAC PDU at an uplink transmission occasion, transmitting a PDCCH, where
a demodulation reference signal antenna port of the PDCCH and the target downlink signal have same quasi co-location properties.

Specifically, except for the execution body, the data transmission method provided in this embodiment of this application is the same as the method described in the foregoing corresponding embodiment and can achieve the same technical effects. The content of this embodiment that is the same as that in the foregoing corresponding embodiment, and the beneficial effects are not detailed herein again.

It should be noted that the data transmission method provided in this embodiment of this application may be performed by a data transmission apparatus, or a control module for performing the data transmission method in the data transmission apparatus. In the embodiments of this application, the data transmission method being performed by the data transmission apparatus is used as an example to describe the data transmission apparatus provided in the embodiments of this application.

FIG. 7 is a first schematic diagram of a data transmission apparatus according to an embodiment of this application. As shown in FIG. 7, an embodiment of this application provides a data transmission apparatus including an obtaining module 701, a determining module 702, and a first transmitting module 703.

The obtaining module 701 is configured to obtain configuration information for data transmission, where the configuration information carries association configuration information between downlink signal and uplink transmission resource. The determining module 702 is configured to select a target downlink signal, and determine a target uplink transmission resource based on the association configuration information between downlink signal and uplink transmission resource. The first transmitting module 703 is configured to determine hybrid automatic repeat request HARQ information corresponding to the target uplink transmission resource and/or estimate a downlink pathloss, and transmit uplink data based on the HARQ information and/or the estimated downlink pathloss.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the data transmission apparatus further includes a receiving module configured to receive downlink data based on the target downlink signal.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the association configuration information between downlink signal and uplink transmission resource includes at least one of the following:
association configuration information between downlink signal and uplink transmission occasion;
identifier of downlink signal;
first scrambling identifier information of uplink signal;
second scrambling identifier information of uplink signal;
code division multiple group information of uplink signal; and
antenna port information of uplink signal.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the configuration information further includes at least one of the following:
the number of uplink transmission occasion that is frequency division multiplexed at one moment;
time domain resource allocation information of uplink transmission occasion;
frequency domain resource allocation information of uplink transmission occasion;
configuration information of downlink signal;
duration information of a configured grant response timer;
measurement threshold for downlink signal selection;
first power ramping step parameter;
second power ramping step parameter;
maximum number of configured grant transmission;
desired receive power;
mask information of uplink transmission occasion;
configured grant periodicity;
duration information of a configured grant timer; and
maximum number of uplink skip; where
the time domain resource allocation information of uplink transmission occasion includes at least one of the following:
   the number of slots in each configured grant period;
   the number of uplink transmission occasion in each slot; and
   the number of uplink transmission occasion in each configured grant period; and
   the frequency domain resource allocation information of uplink transmission occasion includes at least one of the following:
      bandwidth information; and
      information about start location of uplink transmission occasion in frequency domain.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the determining hybrid automatic repeat request HARQ information corresponding to the target uplink transmission resource includes:
determining the HARQ information corresponding to the target uplink transmission resource based on at least one of the following:
a total number of available HARQ process;
index corresponding to the available HARQ process;
a total number of available HARQ process in each configured grant period;
index corresponding to the available HARQ process in each configured grant period; and
index corresponding to HARQ process that corresponds to uplink transmission resource in each configured grant period.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the estimating a downlink pathloss includes:
estimating the downlink pathloss based on the target downlink signal.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the data transmission apparatus is further configured to perform at least one of the following:
in a case that no configuration resource-based data transmission procedure is triggered at any uplink transmission occasion in one configured grant period, incrementing a first counter by 1, where the first counter is used to count skip of data transmission; and
in a case that a value of the first counter is greater than or equal to a maximum number of uplink skip, or in a case that no configuration resource-based data transmission procedure is triggered at any uplink transmission occasion in N consecutive configured grant periodicities, performing at least one of the following terminal behaviors:
   terminating the configuration resource-based data transmission procedure;
   releasing the uplink transmission resource; and
   discarding the configuration information.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the data transmission apparatus is further configured to: after a configuration resource-based data transmission procedure is triggered, perform at least one of the following terminal behaviors:
indicating, by an RRC layer to a MAC layer, that the configuration resource-based data transmission procedure is triggered;
after the MAC layer is indicated by the RRC layer that the configuration resource-based data transmission procedure is triggered, storing the uplink transmission resources and corresponding HARQ information and/or initializing or reinitializing the uplink transmission resources;
in a case that no corresponding MAC PDU is generated at any uplink transmission occasion in one configured grant period, transmitting, by the MAC layer, an uplink skip indication to a higher layer;
in a case that the higher layer receives the uplink skip indication, incrementing a first counter by 1; and
in a case that a value of the first counter is greater than or equal to a maximum number of uplink skip, performing at least one of the following terminal behaviors:
   terminating the configuration resource-based data transmission procedure;
   instructing, by the RRC layer, the MAC layer to end the configuration resource-based data transmission procedure;
   clearing the uplink transmission resources and/or corresponding HARQ information;
   releasing the uplink transmission resource; and
   discarding the configuration information.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the data transmission apparatus is further configured to perform the following:
setting power ramping step parameter based on a second power ramping step parameter configured by a network-side device, a target access identity, and at least one of a target access type provided by a higher layer, and first indication information transmitted by the network-side device, where the power ramping step parameter includes a first power ramping step parameter and the second power ramping step parameter, and the first indication information is used to indicate that the terminal is to use the second power ramping step parameter.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the data transmission apparatus is further configured to perform at least one of the following:
selecting the target downlink signal based on a measurement threshold for downlink signal selection;
generating an uplink signal based on the selected target downlink signal and/or the association configuration information between downlink signal and uplink transmission resource;
determining a latest available uplink transmission occasion based on the selected target downlink signal;
determining an uplink grant and corresponding HARQ information based on the selected uplink transmission occasion; and
delivering the uplink grant and corresponding HARQ information to a HARQ entity.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the HARQ entity performs an uplink skip according to a predefined rule and reports an uplink skip indication to a higher layer.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, in a case that a MAC PDU is obtained, that data is to be transmitted using a corresponding HARQ process is indicated.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the process of transmitting uplink data further includes at least one of the following:
incrementing a third counter by 1 based on a second counter, an indication of suspending a power ramping counter, a listen before talk LBT failure indication, an uplink skip indication, and the selected target downlink signal; and
determining a data transmission power based on the third counter, a power ramping step parameter, the estimated downlink pathloss, and a desired receive power.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the receiving downlink data includes:
after transmission of a MAC PDU at an uplink transmission occasion, performing at least one of following: starting or restarting a configured grant response timer; starting or restarting a configured grant timer; and monitoring a PDCCH, where
a demodulation reference signal antenna port of the PDCCH and the target downlink signal have same quasi co-location properties.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, during running of the configured grant response timer, a terminal behavior includes at least one of the following:
in a case that an indication for confirming correct data transmission has been received, stopping the configured grant response timer and/or the configured grant timer;
in a case that an indication for confirming correct data transmission has been received, restarting a T319 timer;
in a case that an indication for confirming correct data transmission has been received, setting a value of a first counter to 0;
in a case that a PDCCH for scheduling uplink retransmission has been received, stopping the configured grant response timer and/or restarting the configured grant timer;
in a case that a PDCCH for scheduling new uplink transmission has been received, stopping the configured grant response timer and/or the configured grant timer;
in a case that a PDCCH for scheduling downlink transmission has been received and that a corresponding scheduled MAC PDU has been successfully decoded, performing at least one of the following terminal behaviors:
   stopping the configured grant response timer and/or the configured grant timer;
   disassembling and/or demultiplexing the MAC PDU; and
   reporting a HARQ-ACK indication; and
   in a case that a PDCCH for scheduling downlink transmission has been received and that a corresponding scheduled MAC PDU has not been successfully decoded, reporting a HARQ-NACK indication.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, after the configured grant response timer expires, a terminal behavior includes at least one of the following:
incrementing a second counter by 1; and
in a case that a value of the second counter is equal to a threshold of maximum number of configured grant transmission plus 1, performing at least one of the following terminal behaviors:
   reporting a failure or fallback indication to a higher layer;
   terminating a configuration resource-based data transmission procedure;
   releasing the uplink transmission resource;
   discarding the configuration information; and
   clearing the uplink transmission resources and corresponding HARQ information.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

FIG. 8 is a second schematic diagram of a data transmission apparatus according to an embodiment of this application. As shown in FIG. 8, an embodiment of this application provides a data transmission apparatus including a second transmitting module 801 and a receiving module 802.

The second transmitting module 801 is configured to transmit configuration information for data transmission to a terminal, where the configuration information carries association configuration information between reference signal and uplink transmission resource. The receiving module 802 is configured to receive uplink data transmitted by the terminal based on HARQ information and/or a pathloss reference signal, where the HARQ information and/or the pathloss reference signal is determined by the terminal based on the configuration information.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the data transmission apparatus further includes a third transmitting module configured to transmit, based on a target downlink signal selected by the terminal, downlink data to the terminal.

Specifically, the data transmission apparatus provided in this embodiment of this application can implement all the steps of the method implemented in the foregoing method embodiments, with the same technical effects achieved. The content of this embodiment that is the same as that in the method embodiments, and the beneficial effects are not detailed herein again.

Optionally, the transmitting downlink data includes:
after transmission of a MAC PDU at an uplink transmission occasion, transmitting a PDCCH, where
a demodulation reference signal antenna port of the PDCCH and the target downlink signal have same quasi co-location properties.

The data transmission apparatus in this embodiment of this application may be an apparatus, or may be a component, an integrated circuit, or a chip in the terminal. Such apparatus may be a mobile terminal, or may be a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The data transmission apparatus in this embodiment of this application may be an apparatus with an operating system. The operating system may be an Android (Android) operating system, may be an iOS operating system, or may be another possible operating system. This is not specifically limited in this embodiment of this application.

The data transmission apparatus provided in this embodiment of this application can implement the processes implemented in the foregoing embodiments, with the same technical effects achieved. To avoid repetition, details are not described herein again.

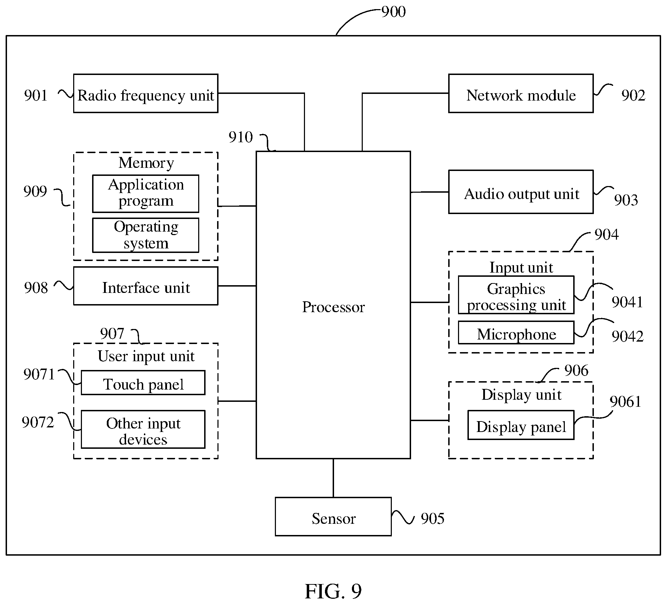

FIG. 9 is a schematic diagram of a hardware structure of a terminal according to an embodiment of this application. As shown in FIG. 9, the terminal 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (such as a battery) for supplying power to the components. The power supply may be logically connected to the processor 910 through a power management system. In this way, functions such as charge management, discharge management, and power consumption management are implemented by using the power management system. The terminal structure shown in FIG. 9 does not constitute any limitation on the terminal. The terminal may include more or fewer components than shown in the figure, or a combination of some components, or components disposed differently. Details are not described herein.

It should be understood that, in this embodiment of this application, the input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. The display unit 906 may include a display panel 9061, and the display panel 9061 may be configured in a form of a liquid crystal display, an organic light-emitting diode display, or the like. The user input unit 907 includes a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a functional button (such as a volume control button or a power on/off button), a trackball, a mouse, and a joystick. Details are not described herein.

In this embodiment of this application, the radio frequency unit 901 transmits downlink information received from a network-side device to the processor 910 for processing, and in addition, transmits uplink data to the network-side device. Generally, the radio frequency unit 901 includes but is not limited to an antenna, at least one amplifier, a transceiver, a coupler, a low noise amplifier, and a duplexer.

The memory 909 may be configured to store software programs or instructions and various data. The memory 909 may mainly include a program or instruction storage area and a data storage area. The program or instruction storage area may store an operating system, an application program or instructions required by at least one function (for example, an audio playing function and an image playing function), and the like. In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another volatile solid-state storage device.

The processor 910 may include one or more processing units. Optionally, the processor 910 may integrate an application processor and a modem processor. The application processor mainly processes an operating system, a user interface, an application program or instructions, and the like. The modem processor mainly processes wireless communication, for example, a baseband processor. It should be understood that alternatively, the modem processor may not be integrated into the processor 910.

The radio frequency unit 901 is configured to obtain configuration information for data transmission, where the configuration information carries association configuration information between downlink signal and uplink transmission resource.

The processor 910 is configured to: select a target downlink signal, and determine, a target uplink transmission resource based on the association configuration information between downlink signal and uplink transmission resource.

The radio frequency unit 901 is further configured to: determine hybrid automatic repeat request HARQ information corresponding to the target uplink transmission resource and/or estimate a downlink pathloss, and transmit uplink data based on the HARQ information and/or the estimated downlink pathloss.

Optionally, the method further includes: receiving, by the terminal, downlink data based on the target downlink signal.

Optionally, the association configuration information between downlink signal and uplink transmission resource includes at least one of the following:
association configuration information between downlink signal and uplink transmission occasion;
identifier of downlink signal;
first scrambling identifier information of uplink signal;
second scrambling identifier information of uplink signal;
code division multiple group information of uplink signal; and
antenna port information of uplink signal.

Optionally, the configuration information further includes at least one of the following:
the number of uplink transmission occasion that is frequency division multiplexed at one moment;
time domain resource allocation information of uplink transmission occasion;
frequency domain resource allocation information of uplink transmission occasion;
configuration information of downlink signal;
duration information of a configured grant response timer;
measurement threshold for downlink signal selection;
first power ramping step parameter;
second power ramping step parameter;
maximum number of configured grant transmission;
desired receive power;
mask information of uplink transmission occasion;
configured grant periodicity;
duration information of a configured grant timer; and
maximum number of uplink skip; where
the time domain resource allocation information of uplink transmission occasion includes at least one of the following:
   the number of slots in each configured grant period;
   the number of uplink transmission occasion in each slot; and
   the number of uplink transmission occasion in each configured grant period; and
   the frequency domain resource allocation information of uplink transmission occasion includes at least one of the following:
      bandwidth information; and
      information about start location of uplink transmission occasion in frequency domain.

Optionally, the determining hybrid automatic repeat request HARQ information corresponding to the target uplink transmission resource includes:
determining the HARQ information corresponding to the target uplink transmission resource based on at least one of the following:
a total number of available HARQ process;
index corresponding to the available HARQ process;
a total number of available HARQ process in each configured grant period;
index corresponding to the available HARQ process in each configured grant period; and
index corresponding to HARQ process that corresponds to uplink transmission resource in each configured grant period.

Optionally, the estimating a downlink pathloss includes:
estimating the downlink pathloss based on the target downlink signal.

Optionally, the method further includes at least one of the following:
in a case that no configuration resource-based data transmission procedure is triggered at any uplink transmission occasion in one configured grant period, incrementing a first counter by 1, where the first counter is used to count skip of data transmission; and
in a case that a value of the first counter is greater than or equal to a maximum number of uplink skip, or in a case that no configuration resource-based data transmission procedure is triggered at any uplink transmission occasion in N consecutive configured grant periodicities, performing at least one of the following terminal behaviors:
   terminating the configuration resource-based data transmission procedure;
   releasing the uplink transmission resource; and
   discarding the configuration information.

Optionally, the method further includes: after a configuration resource-based data transmission procedure is triggered, performing at least one of the following terminal behaviors:
indicating, by an RRC layer to a MAC layer, that the configuration resource-based data transmission procedure is triggered;
after the MAC layer is indicated by the RRC layer that the configuration resource-based data transmission procedure is triggered, storing the uplink transmission resources and corresponding HARQ information and/or initializing or reinitializing the uplink transmission resources;
in a case that no corresponding MAC PDU is generated at any uplink transmission occasion in one configured grant period, transmitting, by the MAC layer, an uplink skip indication to a higher layer;
in a case that the higher layer receives the uplink skip indication, incrementing a first counter by 1; and
in a case that a value of the first counter is greater than or equal to a maximum number of uplink skip, performing at least one of the following terminal behaviors:
   terminating the configuration resource-based data transmission procedure;
   instructing, by the RRC layer, the MAC layer to end the configuration resource-based data transmission procedure;
   clearing the uplink transmission resources and/or corresponding HARQ information;
   releasing the uplink transmission resource; and
   discarding the configuration information.

Optionally, the method further includes:
setting power ramping step parameter based on a second power ramping step parameter configured by a network-side device, a target access identity, and at least one of a target access type provided by a higher layer, and first indication information transmitted by the network-side device, where the power ramping step parameter includes a first power ramping step parameter and the second power ramping step parameter, and the first indication information is used to indicate that the terminal is to use the second power ramping step parameter.

Optionally, the method further includes at least one of the following:
selecting the target downlink signal based on a measurement threshold for downlink signal selection;
generating an uplink signal based on the selected target downlink signal and/or the association configuration information between downlink signal and uplink transmission resource;
determining a latest available uplink transmission occasion based on the selected target downlink signal;
determining an uplink grant and corresponding HARQ information based on the selected uplink transmission occasion; and
delivering the uplink grant and corresponding HARQ information to a HARQ entity.

Optionally, the HARQ entity performs an uplink skip according to a predefined rule and reports an uplink skip indication to a higher layer.

Optionally, in a case that a MAC PDU is obtained, that data is to be transmitted using a corresponding HARQ process is indicated.

Optionally, the process of transmitting uplink data further includes at least one of the following:
incrementing a third counter by 1 based on a second counter, an indication of suspending a power ramping counter, a listen before talk LBT failure indication, an uplink skip indication, and the selected target downlink signal; and
determining a data transmission power based on the third counter, a power ramping step parameter, the estimated downlink pathloss, and a desired receive power.

Optionally, the receiving downlink data includes:
after transmission of a MAC PDU at an uplink transmission occasion, performing at least one of following: starting or restarting a configured grant response timer; starting or restarting a configured grant timer; and monitoring a PDCCH, where
a demodulation reference signal antenna port of the PDCCH and the target downlink signal have same quasi co-location properties.

Optionally, during running of the configured grant response timer, a terminal behavior includes at least one of the following:
in a case that an indication for confirming correct data transmission has been received, stopping the configured grant response timer and/or the configured grant timer;
in a case that an indication for confirming correct data transmission has been received, restarting a T319 timer;
in a case that an indication for confirming correct data transmission has been received, setting a value of a first counter to 0;
in a case that a PDCCH for scheduling uplink retransmission has been received, stopping the configured grant response timer and/or restarting the configured grant timer;
in a case that a PDCCH for scheduling new uplink transmission has been received, stopping the configured grant response timer and/or the configured grant timer;
in a case that a PDCCH for scheduling downlink transmission has been received and that a corresponding scheduled MAC PDU has been successfully decoded, performing at least one of the following terminal behaviors:
stopping the configured grant response timer and/or the configured grant timer;
disassembling and/or demultiplexing the MAC PDU; and
reporting a HARQ-ACK indication; and
in a case that a PDCCH for scheduling downlink transmission has been received and that a corresponding scheduled MAC PDU has not been successfully decoded, reporting a HARQ-NACK indication.

Optionally, after the configured grant response timer expires, a terminal behavior includes at least one of the following:
incrementing a second counter by 1; and
in a case that a value of the second counter is equal to a threshold of maximum number of configured grant transmission plus 1, performing at least one of the following terminal behaviors:
   reporting a failure or fallback indication to a higher layer;
   terminating a configuration resource-based data transmission procedure;
   releasing the uplink transmission resource;
   discarding the configuration information; and
   clearing the uplink transmission resources and corresponding HARQ information.

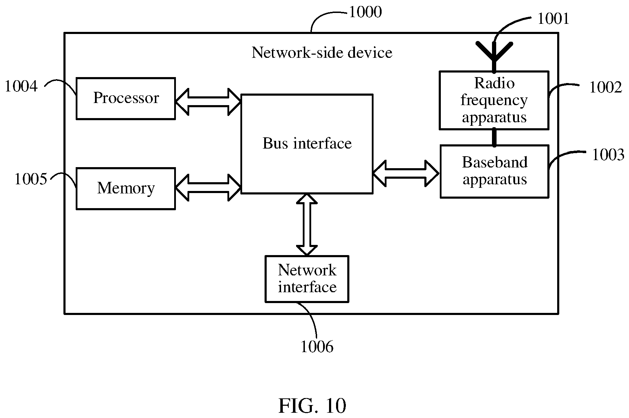

FIG. 10 is a schematic diagram of a hardware structure of a network-side device according to an embodiment of this application. As shown in FIG. 10, the network-side device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001, and transmits the received information to the baseband apparatus 1003 for processing. In a downlink direction, the baseband apparatus 1003 processes to-be-sent information, and transmits the information to the radio frequency apparatus 1002; and the radio frequency apparatus 1002 processes the received information and then transmits the information by using the antenna 1001.

The method performed by the network-side device in the foregoing embodiments may be implemented by the baseband apparatus 1003, and the baseband apparatus 1003 includes a processor 1004 and a memory 1005.

The baseband apparatus 1003 may include, for example, at least one baseband board, where a plurality of chips are disposed on the baseband board. As shown in FIG. 10, one of the chips is, for example, the processor 1004, and connected to the memory 1005, to invoke the program in the memory 1005 to perform the operations of the network-side device shown in the foregoing method embodiments.

The baseband apparatus 1003 may further include a network interface 1006 configured to exchange information with the radio frequency apparatus 1002, where the interface is, for example, a common public radio interface (common public radio interface, CPRI for short).

Specifically, the network-side device in this embodiment of the present invention further includes instructions or a program stored in the memory 1005 and capable of running on the processor 1004. The processor 1004 invokes the instructions or program in the memory 1005 to perform the method performed by the modules shown in FIG. 8, with the same technical effects achieved. To avoid repetition, details are not described herein again.

An embodiment of this application further provides a readable storage medium. The readable storage medium may be volatile or non-volatile, and the readable storage medium stores a program or instructions. When the program or instructions are executed by a processor, the processes in the foregoing data transmission method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing data transmission method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data transmission method, comprising:
obtaining, by a terminal, configuration information for data transmission, wherein the configuration information carries association configuration information between downlink signal and uplink transmission resource;
selecting, by the terminal, a target downlink signal, and determining a target uplink transmission resource based on the association configuration information between downlink signal and uplink transmission resource; and
determining, by the terminal, hybrid automatic repeat request HARQ information corresponding to the target uplink transmission resource and/or estimating a downlink pathloss, and transmitting uplink data based on the HARQ information and/or the estimated downlink pathloss.

2. The data transmission method according to claim 1, wherein the method further comprises: receiving, by the terminal, downlink data based on the target downlink signal.

3. The data transmission method according to claim 1, wherein the association configuration information between downlink signal and uplink transmission resource comprises at least one of the following:
association configuration information between downlink signal and uplink transmission occasion;
identifier of downlink signal;
first scrambling identifier information of uplink signal;
second scrambling identifier information of uplink signal;
code division multiple group information of uplink signal; and
antenna port information of uplink signal.

4. The data transmission method according to claim 1, wherein the configuration information further comprises at least one of the following:
the number of uplink transmission occasion that is frequency division multiplexed at one moment;
time domain resource allocation information of uplink transmission occasion;
frequency domain resource allocation information of uplink transmission occasion;
configuration information of downlink signal;
duration information of a configured grant response timer;
measurement threshold for downlink signal selection;
first power ramping step parameter;
second power ramping step parameter;
maximum number of configured grant transmission;
desired receive power;
mask information of uplink transmission occasion;
configured grant periodicity;
duration information of a configured grant timer; and
maximum number of uplink skip; wherein
the time domain resource allocation information of uplink transmission occasion comprises at least one of the following:
the number of slots in each configured grant period;
the number of uplink transmission occasion in each slot; and
the number of uplink transmission occasion in each configured grant period; and
the frequency domain resource allocation information of uplink transmission occasion comprises at least one of the following:
bandwidth information; and
information about start location of uplink transmission occasion in frequency domain.

5. The data transmission method according to claim 1, wherein the determining hybrid automatic repeat request HARQ information corresponding to the target uplink transmission resource comprises:
determining the HARQ information corresponding to the target uplink transmission resource based on at least one of the following:
a total number of available HARQ process;
index corresponding to the available HARQ process;
a total number of available HARQ process in each configured grant period;
index corresponding to the available HARQ process in each configured grant period; and
index corresponding to HARQ process that corresponds to uplink transmission resource in each configured grant period.

6. The data transmission method according to claim 1, wherein the estimating a downlink pathloss comprises:
estimating the downlink pathloss based on the target downlink signal.

7. The data transmission method according to claim 1, wherein the method further comprises at least one of the following:
in a case that no configuration resource-based data transmission procedure is triggered at any uplink transmission occasion in one configured grant period, incrementing a first counter by 1, wherein the first counter is used to count skip of data transmission; and
in a case that a value of the first counter is greater than or equal to a maximum number of uplink skip, or in a case that no configuration resource-based data transmission procedure is triggered at any uplink transmission occasion in N consecutive configured grant periodicities, performing at least one of the following terminal behaviors:
terminating the configuration resource-based data transmission procedure;
releasing the uplink transmission resource; and
discarding the configuration information.

8. The data transmission method according to claim 1, wherein the method further comprises: after a configuration resource-based data transmission procedure is triggered, performing at least one of the following terminal behaviors:
indicating, by a radio resource control RRC layer to a medium access control MAC layer, that the configuration resource-based data transmission procedure is triggered;
after the MAC layer is indicated by the RRC layer that the configuration resource-based data transmission procedure is triggered, storing the uplink transmission resources and corresponding HARQ information and/or initializing or reinitializing the uplink transmission resources;
in a case that no corresponding medium access control protocol data unit MAC PDU is generated at any uplink transmission occasion in one configured grant period, transmitting, by the MAC layer, an uplink skip indication to a higher layer;
in a case that the higher layer receives the uplink skip indication, incrementing a first counter by 1; and
in a case that a value of the first counter is greater than or equal to a maximum number of uplink skip, performing at least one of the following terminal behaviors:
terminating the data transmission procedure that based on configured resource;
instructing, by the RRC layer, the MAC layer to end the configuration resource-based data transmission procedure;
clearing the uplink transmission resources and/or corresponding HARQ information;
releasing the uplink transmission resource; and
discarding the configuration information.

9. The data transmission method according to claim 1, wherein the method further comprises:
setting power ramping step parameter based on a second power ramping step parameter configured by a network-side device, and at least one of a target access identity provided by a higher layer, a target access type provided by a higher layer, and first indication information transmitted by the network-side device, wherein the power ramping step parameter comprises a first power ramping step parameter and the second power ramping step parameter, and the first indication information is used to indicate that the terminal is to use the second power ramping step parameter.

10. The data transmission method according to claim 1, wherein the method further comprises at least one of the following:
selecting the target downlink signal based on a measurement threshold for downlink signal selection;
generating an uplink signal based on the selected target downlink signal and/or the association configuration information between downlink signal and uplink transmission resource;
determining a latest available uplink transmission occasion based on the selected target downlink signal;
determining an uplink grant and corresponding HARQ information based on the selected uplink transmission occasion; and
delivering the uplink grant and corresponding HARQ information to a HARQ entity.

11. The data transmission method according to claim 10, wherein the HARQ entity performs an uplink skip according to a predefined rule and reports an uplink skip indication to a higher layer.

12. The data transmission method according to claim 11, wherein in a case that a MAC PDU is obtained, that data is to be transmitted using a corresponding HARQ process is indicated.

13. The data transmission method according to claim 1, wherein the process of transmitting uplink data further comprises at least one of the following:
incrementing a third counter by 1 based on a second counter, an indication of suspending a power ramping counter, a listen before talk LBT failure indication, an uplink skip indication, and the selected target downlink signal; and
determining a data transmission power based on the third counter, a power ramping step parameter, the estimated downlink pathloss, and a desired receive power.

14. The data transmission method according to claim 2, wherein the receiving downlink data comprises:
after transmission of a MAC PDU at an uplink transmission occasion, performing at least one of following:
starting or restarting a configured grant response time;
starting or restarting a configured grant timer; and
monitoring a physical downlink control channel PDCCH, wherein
a demodulation reference signal antenna port of the PDCCH and the target downlink signal have same quasi co-location properties.

15. The data transmission method according to claim 14, wherein during running of the configured grant response timer, the terminal performing at least one of following:
in a case that an indication for confirming correct data transmission has been received, stopping the configured grant response timer and/or the configured grant timer;
in a case that an indication for confirming correct data transmission has been received, restarting a T319 timer;
in a case that an indication for confirming correct data transmission has been received, setting a value of a first counter to 0;
in a case that a PDCCH for scheduling uplink retransmission has been received, stopping the configured grant response timer and/or restarting the configured grant timer;
in a case that a PDCCH for scheduling new uplink transmission has been received, stopping the configured grant response timer and/or the configured grant timer;
in a case that a PDCCH for scheduling downlink transmission has been received and that a corresponding scheduled MAC PDU has not been successfully decoded, reporting a hybrid automatic repeat request negative acknowledgment HARQ-NACK indication; and
in a case that a PDCCH for scheduling downlink transmission has been received and that a corresponding scheduled MAC PDU has been successfully decoded, performing at least one of the following:
stopping the configured grant response timer and/or the configured grant timer;
disassembling and/or demultiplexing the MAC PDU; and
reporting a hybrid automatic repeat request acknowledgment HARQ-ACK indication.

16. The data transmission method according to claim 14, wherein after the configured grant response timer expires, a terminal behavior comprises at least one of the following:
incrementing a second counter by 1; and
in a case that a value of the second counter is equal to a threshold of maximum number of configured grant transmission plus 1, performing at least one of the following terminal behaviors:
reporting a failure or fallback indication to a higher layer;
terminating a configuration resource-based data transmission procedure;
releasing the uplink transmission resource;
discarding the configuration information; and
clearing the uplink transmission resources and corresponding HARQ information.

17. A data transmission method, comprising:
transmitting, by a network-side device to a terminal, configuration information for data transmission, wherein the configuration information carries association configuration information between reference signal and uplink transmission resource; and
receiving, by the network-side device, uplink data transmitted by the terminal based on hybrid automatic repeat request HARQ information and/or a pathloss reference signal, wherein the HARQ information and/or the pathloss reference signal is determined by the terminal based on the configuration information.

18. The data transmission method according to claim 17, wherein the method further comprises:
transmitting, based on a target downlink signal selected by the terminal, downlink data to the terminal.

19. The data transmission method according to claim 18, wherein the transmitting downlink data comprises:
after transmission of a medium access control protocol data unit MAC PDU at an uplink transmission occasion, transmitting a physical downlink control channel PDCCH, wherein
a demodulation reference signal antenna port of the PDCCH and the target downlink signal have same quasi co-location properties.

20. A data transmission apparatus, comprising:
an obtaining module, configured to obtain configuration information for data transmission, wherein the configuration information carries association configuration information between downlink signal and uplink transmission resource;
a determining module, configured to: select a target downlink signal, and determine a target uplink transmission resource based on the association configuration information between downlink signal and uplink transmission resource; and
a first transmitting module, configured to: determine hybrid automatic repeat request HARQ information corresponding to the target uplink transmission resource and/or estimate a downlink pathloss, and transmit uplink data based on the HARQ information and/or the estimated downlink pathloss.

21. The data transmission apparatus according to claim 20, further comprising a receiving module configured to receive downlink data based on the target downlink signal.

22. The data transmission apparatus according to claim 20, wherein the association configuration information between downlink signal and uplink transmission resource comprises at least one of the following:
association configuration information between downlink signal and uplink transmission occasion;
identifier of downlink signal;
first scrambling identifier information of uplink signal;
second scrambling identifier information of uplink signal;
code division multiple group information of uplink signal; and
antenna port information of uplink signal.

23. The data transmission apparatus according to claim 20, wherein the configuration information further comprises at least one of the following:
the number of uplink transmission occasion that is frequency division multiplexed at one moment;
time domain resource allocation information of uplink transmission occasion;
frequency domain resource allocation information of uplink transmission occasion;
configuration information of downlink signal;
duration information of a configured grant response timer;
measurement threshold for downlink signal selection;
first power ramping step parameter;
second power ramping step parameter;
maximum number of configured grant transmission;
desired receive power;
mask information of uplink transmission occasion;
configured grant periodicity;
duration information of a configured grant timer; and
maximum number of uplink skip; wherein
the time domain resource allocation information of uplink transmission occasion comprises at least one of the following:
the number of slots in each configured grant period;
the number of uplink transmission occasion in each slot; and
the number of uplink transmission occasion in each configured grant period; and
the frequency domain resource allocation information of uplink transmission occasion comprises at least one of the following:
bandwidth information; and
information about start location of uplink transmission occasion in frequency domain.

24. The data transmission apparatus according to claim 20, wherein the determining hybrid automatic repeat request HARQ information corresponding to the target uplink transmission resource comprises:
determining the HARQ information corresponding to the target uplink transmission resource based on at least one of the following:
a total number of available HARQ process;
index corresponding to the available HARQ process;
a total number of available HARQ process in each configured grant period;
index corresponding to the available HARQ process in each configured grant period; and
index corresponding to HARQ process that corresponds to uplink transmission resource in each configured grant period.

25. The data transmission apparatus according to claim 20, wherein the estimating a downlink pathloss comprises:
estimating the downlink pathloss based on the target downlink signal.

26. The data transmission apparatus according to claim 20, wherein the apparatus is further configured to perform at least one of the following:
in a case that no configuration resource-based data transmission procedure is triggered at any uplink transmission occasion in one configured grant period, incrementing a first counter by 1, wherein the first counter is used to count skip of data transmission; and
in a case that a value of the first counter is greater than or equal to a maximum number of uplink skip, or in a case that no configuration resource-based data transmission procedure is triggered at any uplink transmission occasion in N consecutive configured grant periodicities, performing at least one of the following terminal behaviors:
terminating the configuration resource-based data transmission procedure;
releasing the uplink transmission resource; and
discarding the configuration information.

27. The data transmission apparatus according to claim 20, wherein after a configuration resource-based data transmission procedure is triggered, a terminal behavior comprises at least one of the following:
indicating, by a radio resource control RRC layer to a medium access control MAC layer, that the configuration resource-based data transmission procedure is triggered;
after the MAC layer is indicated by the RRC layer that the configuration resource-based data transmission procedure is triggered, storing the uplink transmission resources and corresponding HARQ information and/or initializing or reinitializing the uplink transmission resources;
in a case that no corresponding medium access control protocol data unit MAC PDU is generated at any uplink transmission occasion in one configured grant period, transmitting, by the MAC layer, an uplink skip indication to a higher layer;
in a case that the higher layer receives the uplink skip indication, incrementing a first counter by 1; and
in a case that a value of the first counter is greater than or equal to a maximum number of uplink skip, performing at least one of the following terminal behaviors:
terminating the configuration resource-based data transmission procedure;
instructing, by the RRC layer, the MAC layer to end the configuration resource-based data transmission procedure;
clearing the uplink transmission resources and/or corresponding HARQ information;
releasing the uplink transmission resource; and
discarding the configuration information.

28. The data transmission apparatus according to claim 20, wherein the apparatus is further configured to perform the following:
setting power ramping step parameter based on a second power ramping step parameter configured by a network-side device, a target access identity, and at least one of a target access type provided by a higher layer, and first indication information transmitted by the network-side device, wherein the power ramping step parameter comprises a first power ramping step parameter and the second power ramping step parameter, and the first indication information is used to indicate that the terminal is to use the second power ramping step parameter.

29. The data transmission apparatus according to claim 20, wherein the apparatus is further configured to perform at least one of the following:
selecting the target downlink signal based on a measurement threshold for downlink signal selection;
generating an uplink signal based on the selected target downlink signal and/or the association configuration information between downlink signal and uplink transmission resource;
determining a latest available uplink transmission occasion based on the selected target downlink signal;
determining an uplink grant and corresponding HARQ information based on the selected uplink transmission occasion; and
delivering the uplink grant and corresponding HARQ information to a HARQ entity.

30. The data transmission apparatus according to claim 29, wherein the HARQ entity performs an uplink skip according to a predefined rule and reports an uplink skip indication to a higher layer.

31. The data transmission apparatus according to claim 30, wherein in a case that a MAC PDU is obtained, that data is to be transmitted using a corresponding HARQ process is indicated.

32. The data transmission apparatus according to claim 20, wherein the process of transmitting uplink data further comprises at least one of the following:
incrementing a third counter by 1 based on a second counter, an indication of suspending a power ramping counter, a listen before talk LBT failure indication, an uplink skip indication, and the selected target downlink signal; and
determining a data transmission power based on the third counter, a power ramping step parameter, the estimated downlink pathloss, and a desired receive power.

33. The data transmission apparatus according to claim 21, wherein the receiving downlink data comprises:
after transmission of a MAC PDU at an uplink transmission occasion, performing at least one of following: starting or restarting a configured grant response timer; starting or restarting a configured grant timer; and monitoring a physical downlink control channel PDCCH, wherein
a demodulation reference signal antenna port of the PDCCH and the target downlink signal have same quasi co-location properties.

34. The data transmission apparatus according to claim 33, wherein during running of the configured grant response timer, a terminal behavior comprises at least one of the following:
in a case that an indication for confirming correct data transmission has been received, stopping the configured grant response timer and/or the configured grant timer;
in a case that an indication for confirming correct data transmission has been received, restarting a T319 timer;
in a case that an indication for confirming correct data transmission has been received, setting a value of a first counter to 0;
in a case that a PDCCH for scheduling uplink retransmission has been received, stopping the configured grant response timer and/or restarting the configured grant timer;
in a case that a PDCCH for scheduling new uplink transmission has been received, stopping the configured grant response timer and/or the configured grant timer;
in a case that a PDCCH for scheduling downlink transmission has been received and that a corresponding scheduled MAC PDU has not been successfully decoded, reporting a hybrid automatic repeat request negative acknowledgment HARQ-NACK indication; and
in a case that a PDCCH for scheduling downlink transmission has been received and that a corresponding scheduled MAC PDU has been successfully decoded, performing at least one of the following:
stopping the configured grant response timer and/or the configured grant timer;
disassembling and/or demultiplexing the MAC PDU; and
reporting a hybrid automatic repeat request acknowledgment HARQ-ACK indication.

35. The data transmission apparatus according to claim 33, wherein after the configured grant response timer expires, a terminal behavior comprises at least one of the following:
incrementing a second counter by 1; and
in a case that a value of the second counter is equal to a threshold of maximum number of configured grant transmission plus 1, performing at least one of the following terminal behaviors:
reporting a failure or fallback indication to a higher layer;
terminating a configuration resource-based data transmission procedure;
releasing the uplink transmission resource;
discarding the configuration information; and
clearing the uplink transmission resources and corresponding HARQ information.

36. A data transmission apparatus, comprising:
a second transmitting module, configured to transmit configuration information for data transmission to a terminal, wherein the configuration information carries association configuration information between reference signal and uplink transmission resource; and
a receiving module, configured to receive uplink data transmitted by the terminal based on hybrid automatic repeat request HARQ information and/or a pathloss reference signal, wherein the HARQ information and/or the pathloss reference signal is determined by the terminal based on the configuration information.

37. The data transmission apparatus according to claim 36, further comprising a third transmitting module configured to transmit downlink data to the terminal based on a target downlink signal selected by the terminal.

38. The data transmission apparatus according to claim 37, wherein the transmitting downlink data comprises:
after transmission of a medium access control protocol data unit MAC PDU at an uplink transmission occasion, transmitting a physical downlink control channel PDCCH, wherein
a demodulation reference signal antenna port of the PDCCH and the target downlink signal have same quasi co-location properties.

39. A terminal, comprising a processor, a memory, and a program or instructions stored in the memory and capable of running on the processor, wherein when the program or instructions are executed by the processor, the steps of the data transmission method according to any one of claims 1 to 16 are implemented.

40. A network-side device, comprising a processor, a memory, and a program or instructions stored in the memory and capable of running on the processor, wherein when the program or instructions are executed by the processor, the steps of the data transmission method according to any one of claims 17 to 19 are implemented.

41. A readable storage medium, wherein the readable storage medium stores a program or instructions, and when the program or instructions are executed by a processor, the steps of the data transmission method according to any one of claims 1 to 16 or the data transmission method according to any one of claims 17 to 19 are implemented.

42. A data transmission apparatus, wherein the apparatus is configured to perform the data transmission method according to any one of claims 1 to 16 or the data transmission method according to any one of claims 17 to 19.

43. A chip, wherein the chip comprises a processor and a communication interface, the communication interface is coupled to the processor, and the processor is configured to run a program or instructions to implement the data transmission method according to any one of claims 1 to 16 or the data transmission method according to any one of claims 17 to 19.

44. A computer program product, wherein the computer program product is stored in a non-transitory storage medium, and the computer program product is executed by a processor to implement the data transmission method according to any one of claims 1 to 16 or the data transmission method according to any one of claims 17 to 19.
